# FASCICULE DE BREVET EUROPEEN

(11) **EP 2 701 924 B1**
(45) Date de publication et mention de la délivrance du brevet: **18.02.2015**
(21) Numéro de dépôt: 12722403.8
(22) Date de dépôt: 12.04.2012
(51) Int. Cl.: B60B 7/02, B60B 7/10, B60B 7/06

(54) **ENJOLIVEUR DE ROUE COMPORTANT UN DISPOSITIF ANTI-ROTATION ET VEHICULE COMPORTANT UN TEL ENJOLIVEUR**
RADZIERBLENDE MIT EINER DREHSICHERUNGSVORRICHTUNG UND FAHRZEUG MIT EINER SOLCHEN RADZIERBLENDE
WHEEL COVER COMPRISING AN ANTI-ROTATION DEVICE AND VEHICLE COMPRISING SUCH A WHEEL COVER

(30) Priorité: 27.04.2011 FR 1153610
(43) Date de publication de la demande: 05.03.2014
(73) Titulaire: Zanini Auto Grup, S.A., 08150 Parets del Vallés - Barcelona (ES)
(72) Inventeur: LARROQUE, Sebastien, F-27200 Vernon (FR)
(74) Mandataire: Carpintero Lopez, Francisco
(86) Numéro de dépôt international: PCT/FR2012/050794
(87) Numéro de publication internationale: WO 2012/146855

(56) Documents cités:
- US-A- 4 217 003
- US-B1- 6 238 007
- US-B1- 7 131 705

## Description

La présente invention se rapporte à un enjoliveur destiné à être positionné sur une roue d'un véhicule, en particulier d'un véhicule automobile.

Elle concerne principalement un enjoliveur de roue destiné à être solidarisé sur une roue, recouvrant au moins partiellement une surface latérale de la roue, la roue étant fixée sur un moyeu par quatre ou cinq vis de fixation régulièrement réparties. Un tel enjoliveur comporte des moyens anti-rotation destinés à coopérer avec au moins une vis de fixation de manière à bloquer en rotation l'enjoliveur une fois celui-ci positionné sur la roue.

Dans un souci esthétique, de nombreux véhicules, quelles qu'en soient leurs utilisations, sont équipés d'enjoliveurs. Ces éléments viennent cacher les moyeux de roues, les éléments de fixation des jantes et les jantes elles-mêmes, la plupart de ces éléments étant inesthétiques pour des raisons de coût.

Tout en restant facilement amovible, les enjoliveurs peuvent aussi assurer une protection des éléments de fixation des jantes, généralement des vis, contre les intempéries et les projections diverses. Ces vis de fixation sont alors moins attaquées par la corrosion et ne viennent pas se gripper dans leurs logements, facilitant leurs démontages le cas échéant.

Comme présentés dans le document FR2595071, les enjoliveurs sont rapportés latéralement contre les roues et sont fixés à celles-ci au moyens de griffes qui, coopérant avec un rebord périphérique des jantes, permettent de maintenir les enjoliveurs sur les jantes. Pour assurer à la fois le rôle de protection contre la corrosion et le rôle esthétique, les enjoliveurs ne comportent que peu d'ouvertures, recouvrant presque totalement les jantes qu'ils recouvrent. Mais il est aussi important de conserver au moins une ouverture dans chaque enjoliveur, permettant d'accéder aux valves permettant de contrôle et de corriger la pression d'air présente dans les pneumatiques montés sur les jantes. Une telle ouverture dans chaque l'enjoliveur doit être parfaitement positionnée en regard de chaque valve. Lors du roulage du véhicule, les griffes peuvent glisser le long du rebord périphérique des jantes, ne mettant plus en regard la valve avec l'ouverture correspondante de chaque enjoliveur.

Pour remédier à ce problème, un type d'enjoliveur connu, présenté notamment par le document EP-B1-0116265, et qui comporte les caractéristiques du préambule de la revendication 1, comporte des logements réalisés dans sa partie centrale, en regard de la jante, qui viennent s'ajuster sur une vis de fixation de la roue. De cette manière, l'enjoliveur est solidarisé avec la roue dans une position angulaire précise, et ne peut pas tourner par rapport à la jante.

Un problème qui se pose alors avec ce type d'enjoliveur, est que le nombre de vis de fixation est variable et généralement au nombre de quatre ou cinq suivant les véhicules. Hors il est souhaitable de pouvoir monter un même enjoliveur sur une jante équipée de quatre ou de cinq vis de fixation.

La présente invention a notamment pour but de résoudre ces problèmes, et de proposer un enjoliveur de roue adapté à un montage sur une roue fixée sur un moyeu de roue par quatre ou par cinq vis de fixation, tout en conservant un dispositif anti-rotation. Une telle solution devant être simple, économique, efficace et sûre.

A cet effet, l'invention a pour objet un enjoliveur destiné à être solidarisé sur une roue d'un véhicule, notamment d'un véhicule automobile, recouvrant au moins partiellement une surface latérale de cette roue, la roue étant fixée sur un moyeu par quatre ou cinq vis de fixation régulièrement réparties, l'enjoliveur comporte des moyens anti-rotation destinés à coopérer avec au moins une vis de fixation de manière à bloquer en rotation l'enjoliveur une fois celui-ci positionné sur la roue, tel que les moyens anti-rotation comportent deux premières parois et deux secondes parois formant des surfaces d'appui positionnées de telle sorte que, suivant que la roue soit fixée par quatre ou cinq vis de fixation sur le moyeu, les deux premières parois sont en appui contre deux des quatre vis de fixation ou les deux seconde parois sont en appui contre deux des cinq vis de fixation.

Selon une première caractéristique de l'invention, les surfaces d'appui des deux premières parois ou des deux secondes parois bloquent dans deux directions opposées la rotation de l'enjoliveur.

Selon une deuxième caractéristique de l'invention, les deux premières parois ou les deux secondes parois sont formées par des demi-tubes cylindriques. Une variante peut aussi consister à avoir les deux premières parois et les deux secondes parois qui sont formées par deux tubes cylindriques oblongs.

Que ce soit dans la première ou dans la seconde variante, les deux premières parois sont positionnées avec un décalage angulaire de 90° ou de 180° par rapport au centre de rotation de l'enjoliveur. De même, les deux secondes parois sont positionnées avec un décalage angulaire de 72° ou de 144°par rapport au centre de rotation de l'enjoliveur.

La présente invention concerne aussi une roue de véhicule, notamment de véhicule automobile, comportant un enjoliveur suivant au moins une des caractéristiques précédentes. Elle concerne aussi un véhicule, notamment un véhicule automobile, comportant une telle roue.

D'autres avantages et caractéristiques techniques de la présente invention apparaîtrons plus clairement à la lumière de la description qui suit en référence aux figures des dessins annexés parmi lesquelles :
- La figure 1 représente une vue, en perspective, d'une roue en cours d'assemblage avec un enjoliveur selon l'invention; et
- Les figures 2 à 4 représentent des vues de la face intérieure de l'enjoliveur comportant des moyens anti-rotation selon l'invention.

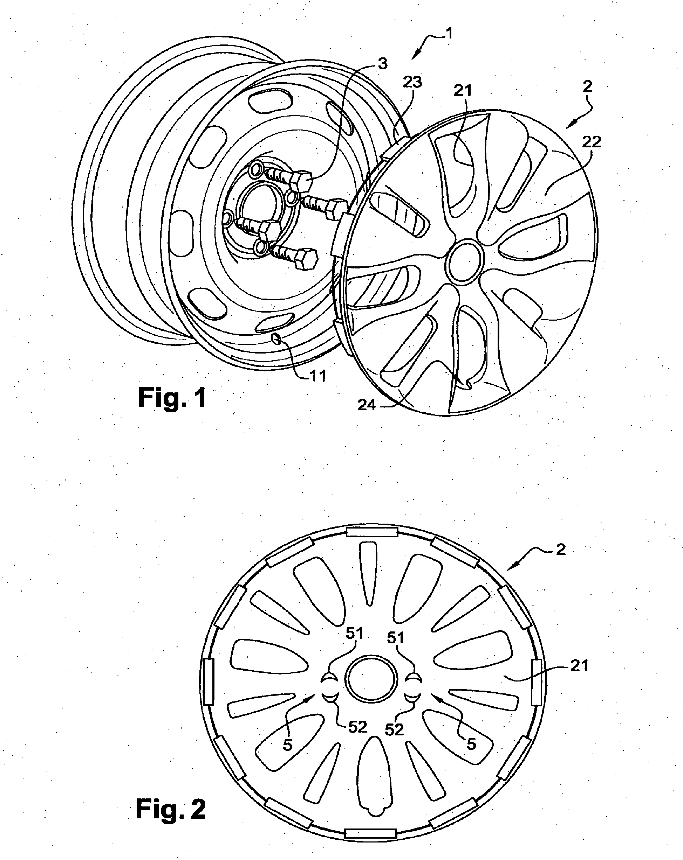

La figure 1 représente une vue en perspective d'une jante 1, constituant la partie centrale d'une roue autour de laquelle est normalement positionné un pneumatique (non représenté) et d'un enjoliveur 2 en cours d'assemblage sur la jante 1. Une telle jante 1 est solidarisée sur un moyeu d'un véhicule par l'intermédiaire de vis de fixation 3. Sur l'exemple présenté, la jante 3 est solidarisée au moyeu par l'intermédiaire de quatre vis de fixation 3. L'enjoliveur 2 comporte une face intérieure 21 destinée à être positionnée en regard de la jante 1 et une face extérieure 22 qui constitue la face visible de l'enjoliveur 2 une fois celui-ci positionné sur la jante 1. L'enjoliveur 2 est solidarisé sur la jante 1 par l'intermédiaire de pattes de fixations 23, positionnées le long d'une surface périphérique de la face intérieure 21 de l'enjoliveur 2. L'enjoliveur 2 comporte une ouverture 24 destinée à être positionnée en regard d'une ouverture 11 formée dans la jante 1, par laquelle passe une valve permettant la vérification et l'ajustage de la pression d'air présente dans le pneumatique. Une telle valve doit toujours rester accessible une fois l'enjoliveur 2 positionné sur la jante 1. L'enjoliveur 2 comporte sur sa face intérieure 21 des moyens anti-rotation (non représentés sur cette figure) collaborant avec les vis de fixation 3, permettent de toujours avoir l'ouverture 24 de l'enjoliveur 2 en regard de l'ouverture 11 de la jante 1, assurant l'accessibilité de la valve du pneumatique.

Les figures 2 à 4 représentent des vues de la face intérieure 21 de l'enjoliveur 2 comportant des moyens anti-rotation 5 selon l'invention.

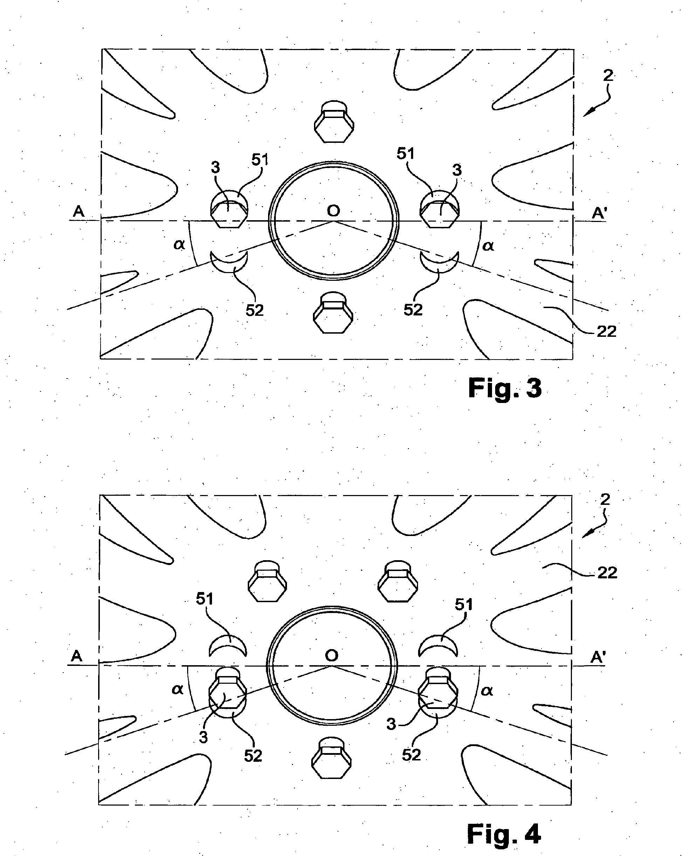

En particulier, la figure 2 représente une vue d'ensemble de cette face intérieure 21 de l'enjoliveur 2. Les figures 3 et 4 représentent des vues de détails de la face intérieure 21 de l'enjoliveur 2, ainsi que des vues des vis de fixation 3 permettant de solidariser la jante au porte moyeu correspondant.

Selon l'invention, les moyens anti-rotation 5 sont formés par quatre parois, positionnés par deux. Suivant que la jante soit solidarisée sur le moyeu au moyen de quatre ou de cinq vis de fixation 3, Les deux premières parois 51 et les deux secondes parois 52 sont alternativement en appui contre deux vis de fixation 3. Ainsi, deux cas se présentent :
Dans le cas d'une jante solidarisée sur un moyeu au moyen de quatre vis de fixation 3 et telle que représentée en figure 3, les deux premières parois 51 sont positionnées d'un même coté d'un axe de symétrie AA'. L'axe AA' est défini comme passant par le centre O de l'enjoliveur 2 et par deux des quatre vis de fixation 3 contre lesquelles sont en appui les deux premières parois 51,
• dans le cas une jante 1 solidarisée sur un moyeu au moyen de cinq vis de fixation 3 et telle que représentée en figure 4, les deux secondes parois 52 sont positionnées du coté opposé de l'axe de symétrie AA', en appui contre deux des cinq vis de fixation 3.

Le fait de positionner les deux premières parois 51 et les deux secondes parois 52 des deux cotés de l'axe de symétrie AA', fait qu'elles sont suffisamment espacées les unes des l'autres pour ne pas perturber le montage des enjoliveurs 2. L'enjoliveur 2 qui est maintenu par les pattes de fixations 23 sur la jante et qui est en appui contre les deux premières parois 51 ou contre les deux secondes parois 52, présente un positionnement isostatique garantissant le maintien de l'ouverture 24 en face de l'ouverture 11 de la jante 1 permettant d'accéder à la valve du pneumatique.

Sur le mode de réalisation tel que décrit dans les figures 2 à 4, les deux premières parois 51 sont formées par deux demi-tubes cylindriques de révolution, dont les centres sont alignées le long de l'axe AA' et sont positionnées d'un même coté de l'axe AA', tel que décrit précédemment. Les deux secondes parois 52 sont aussi formées par deux demi-tubes cylindriques de révolution, positionnées de l'autre coté de l'axe AA' et formant un angle α par rapport à l'axe AA' et au centre O de l'enjoliveur. Cet angle α correspond à un angle de 18° Les deux vis de fixation 3 sont ainsi positionnées à l'intérieur des deux demi-tubes cylindriques de révolution 51 ou 52 correspondants.

Suivant différentes variantes il est possible de remplacer les quatre demi-tubes cylindriques de révolution par deux tubes cylindriques oblongs. D'autres formes pour ces quatre parois pouvant aussi convenir, permettant toujours de former des surfaces d'appui aux vis de fixation 3.

Pour quatre vis de fixation 3, le décalage angulaire entre deux vis successives est de 90°, faisant que les deux premières parois 51 sont décalées de 90° ou 180° l'une par rapport à l'autre.

Pour cinq vis de fixation 3, le décalage angulaire entre deux vis successives est de 72°, faisant que les deux second es parois 52 sont décalées de 72° ou 144° l'une par rapport à l'autre.

Ce décalage angulaire permet aussi, lors du montage des enjoliveurs 2 sur la roue, de ne pas inverser le positionnement de l'enjoliveur 2 par rapport aux vis de fixation 3 et ainsi de bien positionner l'ouverture de l'enjoliveur en regard de l'ouverture de la jante, formant un moyen de détrompage.

Il est bien entendu que l'invention n'est pas limitée aux modes de réalisations qui ont été décrits, mais est susceptible de recevoir de nombreuses modifications qui apparaîtront à l'homme du métier.

## Revendications

1. Enjoliveur (2) destiné à être solidarisé sur une roue d'un véhicule, notamment d'un véhicule automobile, recouvrant au moins partiellement une surface latérale de ladite roue, la roue étant fixée sur un moyeu par quatre ou cinq vis de fixation (3) régulièrement réparties, ledit enjoliveur (2) comporte des moyens anti-rotation (5) destinés à coopérer avec au moins une vis de fixation (3) de manière à bloquer en rotation l'enjoliveur (2) une fois celui-ci positionné sur la roue, **caractérisé en ce que** les moyens anti-rotation (5) comportent deux premières parois (51) et deux secondes (52) parois formant des surfaces d'appui positionnées de telle sorte que, suivant que la roue soit fixée par quatre ou cinq vis de fixation (3) sur ledit moyeu, les deux premières parois (51) sont en appui contre deux des quatre vis de fixation (3) ou les deux seconde parois (52) sont en appui contre deux des cinq vis de fixation (3).

2. Enjoliveur (2) selon la revendication 1, **caractérisé en ce que** les surfaces d'appui des deux premières parois (51) ou des deux secondes parois (52) bloquent dans deux directions opposées la rotation de l'enjoliveur (2).

3. Enjoliveur (2) selon la revendication 1 ou 2, **caractérisé en ce que** les deux premières parois (51) ou les deux secondes parois (52) sont formées par des demi-tubes cylindriques.

4. Enjoliveur (2) selon la revendication 1 ou 2, **caractérisé en ce que** les deux premières parois (51) et les deux secondes parois (52) sont formées par deux tubes cylindriques oblongs.

5. Enjoliveur (2) selon l'une quelconque des revendications précédentes, **caractérisé en ce que** les deux premières parois (51) sont positionnées avec un décalage angulaire de 90° ou de 180° par rapport au centre de rotation de l'enjoliveur (2).

6. Enjoliveur (2) selon l'une quelconque des revendications précédentes, **caractérisé en ce que** les deux secondes parois (52) sont positionnées avec un décalage angulaire de 72° ou de 144° par rapport au centre de rotation de l'enjoliveur (2).

7. Roue de véhicule, notamment de véhicule automobile, comportant un enjoliveur (2) selon l'une quelconque des revendications précédentes.

8. Véhicule, notamment véhicule automobile, comportant une roue selon la revendication précédente.

## Patentansprüche

1. Radkappen (2), dazu bestimmt um mit einem Rad eines Fahrzeugs verbunden zu werden, insbesondere eines Kraftfahrzeugs, abdeckend mindestens zum Teil eine laterale Oberfläche des genannten Rades, das Rad ist an einer Nabe durch vier oder fünf Befestigungsschrauben (3), gleichmäßig verteilt, befestigt, genannte Radkappe (2) ist mit Anti-Rotationsmitteln (5) ausgestattet, dazu bestimmt um mit mindestens einer Befestigungsschraube (3) zusammen zu wirken, um eine Rotation der Radkappe (2) zu blockieren, so diese einmal am Rad positioniert ist, **dadurch gekennzeichnet, dass** die Anti-Rotationsmittel (5) zwei erste Wandungen (51) und zwei zweite Wandungen (52) umfassen, Auflageflächen formend, positioniert derart, dass, je nachdem ob das Rad durch vier oder fünf Befestigungsschrauben (3) an genannter Nabe befestigt ist, die zwei ersten Wandungen (51) an zwei der vier Befestigungsschrauben (3) anliegen oder die zwei zweiten Wandungen (52) an zwei der fünf Befestigungsschrauben (3) anliegen.

2. Radkappe (2) gemäß Anspruch 1, **dadurch gekennzeichnet, dass** die Auflageflächen der zwei ersten Wandungen (51) oder der zwei zweiten Wandungen (52) in zwei entgegengesetzte Richtungen, die Rotation der Radkappe (2) blockieren.

3. Radkappe (2) gemäß Anspruch 1 oder 2, **dadurch gekennzeichnet, dass** die zwei ersten Wandungen (51) oder die zwei zweiten Wandungen (52) durch zylindrische Halb-Rohre gebildet werden.

4. Radkappe (2) gemäß Anspruch 1 oder 2, **dadurch gekennzeichnet, dass** die zwei ersten Wandungen (51) und die zwei zweiten Wandungen (52) durch zwei zylindrische, längliche Rohre gebildet werden.

5. Radkappen (2) gemäß einem der vorhergehenden Ansprüche, **dadurch gekennzeichnet, dass** die zwei ersten Wandungen (51) mit einem Winkelversatz von 90°oder 180° im Verhältnis zum Drehpunkt der Radkappe (2) positioniert sind.

6. Radkappe (2) gemäß einem der vorhergehenden Ansprüche, **dadurch gekennzeichnet, dass** die zwei zweiten Wandungen (52) mit einem Winkelversatz von 72° oder 144° im Verhältnis zum Drehpunkt der Radkappe (2) positioniert sind.

7. Fahrzeugrad, umfassend eine Radkappe (2), gemäß einem der vorhergehenden Ansprüche.

8. Fahrzeug, insbesondere Kraftfahrzeug, umfassend ein Rad gemäß des vorhergehenden Anspruches.

## Claims

1. A hubcap (2) designed to be fixed to one wheel of a vehicle, particularly a motor vehicle, covering at least partially a lateral surface of said wheel, the wheel being fixed to a hub by four or five regularly distributed fixing screws (3), and said hubcap (2) comprises anti-rotation means (5) designed to interact with at least one fixing screw (3) in order to block the rotation of the hubcap (2) once the latter is positioned on the wheel, **characterised in that** the anti-rotation means (5) comprise two first walls (51) and two second (52) walls forming support surfaces positioned so that, according to whether the wheel is fixed by four or five fixing screws (3) to said hub, the first two walls (51) are supported against two of the four fixing screws (3) or the two second walls (52) are supported against two of the five fixing screws (3).

2. The hubcap (2) according to Claim 1, **characterised in that** the support surfaces of the two first walls (51) or of the two second walls (52) block the rotation of the hubcap (2) in two opposite directions.

3. The hubcap (2) according to Claim 1 or 2, **characterised in that** the two first walls (51) or the two second walls (52) are formed by cylindrical half-tubes.

4. The hubcap (2) according to Claim 1 or 2, **characterised in that** the two first walls (51) and the two second walls (52) are formed by two oblong cylindrical tubes.

5. The hubcap (2 according to any one of the preceding claims, **characterised in that** the two first walls (51) are positioned with an angular offset of 90° or 180° relative to the centre of rotation of the hubcap (2).

6. The hubcap (2) according to any one of the preceding claims, **characterised in that** the two second walls (52) are positioned with an angular offset of 72° or 144° relative to the centre of rotation of the hubcap (2).

7. A vehicle wheel, in particular that of a motor vehicle, comprising a hubcap (2) according to any one of the preceding claims.

8. A vehicle, in particular a motor vehicle, comprising a wheel according to the preceding claim.
